# EUROPÄISCHE PATENTSCHRIFT

(11) **EP 1 224 661 B1**
(45) Veröffentlichungstag und Bekanntmachung des Hinweises auf die Patenterteilung: **15.12.2004**
(21) Anmeldenummer: 00983054.8
(22) Anmeldetag: 24.10.2000
(51) Int. Cl.: G10L 17/00

(54) **VERFAHREN UND ANORDNUNG ZUR VERIFIKATION EINES SPRECHERS ANHAND EINES RECHNERS**
METHOD AND ARRANGEMENT FOR VERIFYING A SPEAKER WITH A COMPUTER
PROCEDE ET DISPOSITIF POUR LA VERIFICATION D'UN LOCUTEUR A L'AIDE D'UN ORDINATEUR

(30) Priorität: 28.10.1999 DE 19952049
(43) Veröffentlichungstag der Anmeldung: 24.07.2002
(73) Patentinhaber: SIEMENS AKTIENGESELLSCHAFT, 80333 München (DE)
(72) Erfinder: KÜPPER, Wolfgang, 80796 München (DE); GRASHEY, Stephan, 82140 Olching (DE)
(86) Internationale Anmeldenummer: PCT/DE2000/003754
(87) Internationale Veröffentlichungsnummer: WO 2001/031637

(56) Entgegenhaltungen:
- EP-A- 0 953 972
- WO-A-94/00838
- WO-A-95/08821
- FURUI S ET AL: "PHONEME-LEVEL VOICE INDIVIDUALITY USED IN SPEAKER RECOGNITION" YOKOHAMA, JAPAN, SEPT. 18 - 22, 1994,YOKOHAMA: ASJ,JP, 18. September 1994 (1994-09-18), Seiten 1463-1466, XP000855540

## Beschreibung

Die Erfindung betrifft ein Verfahren und eine Anordnung zur Verifikation eines Sprechers anhand eines Rechners.

Bei einer Sprecherverifikation soll ein Sprecher gegenüber einem System, z.B. im Rahmen einer Zugangskontrolle, identifiziert bzw. authentifiziert werden anhand seiner Stimme. Dabei geht es bei der Verifikation insbesondere darum, auch sicherzustellen, daß der richtige Benutzer spricht, die Eigenart des Sprechers authentifiziert ihn somit gegenüber dem System.

Eine dazu geeignete Vorrichtung ist aus DE 199 07 854 A1 bekannt. Dort wird auch vorgeschlagen, daß der Sprecher nur verifiziert wird, falls die Güte der Codeworteingabe über einer vorgegebenen Akzeptanzschwelle liegt.

Es ist problematisch, daß es zur Überlistung des Systems (z.B. der Zugangskontrolle) durch einen unberechtigten Benutzer (Angreifer) möglicherweise ausreichen kann, die Paßworteingabe des berechtigten Benutzers aufzunehmen und durch Abspielen der Aufnahme unberechtigt Zugang zu erlangen. Dieser Angriff ist gerade dann einfach, wenn jeder Sprecher, der sich gegenüber dem System authentifiziert, ein eigenes Paßwort hat, welches in Form gesprochener Sprache mit Mustern desselben Paßworts desselben Sprechers verglichen wird und bei ausreichend guter Übereinstimmung, Zugang zu dem System gewährt wird.

Insofern ist es von Nachteil, daß ein verhältnismäßig einfacher Angriff des Unberechtigten zum Erfolg führen kann und damit zur recht niedrigen Akzeptanz der Verifikation des Sprechers anhand seiner Äußerung beiträgt.

Aus Furui S. et al. "Phoneme-Level Voice Individuality Used in Speaker Recognition", Yokohama, Japan, 1994, Yokohama: ASJ, Seiten 1463-1466 wird ein Verfahren zur Verifikation eines Sprechers anhand eines Rechners angegeben, bei dem Phoneme verwendet werden, also die kleinsten bedeutungsunterscheidenden lautlichen Einheiten. Dadurch ist das mögliche Vokabular, das ein Sprecher sprechen darf, nicht fest vorgegeben. Andererseits ist man bei der Verwendung von Phonemen nach dem offenbarten Verfahren gezwungen, zur Modellierung der Sprecher relativ rechenaufwendige Methoden, wie beispielsweise HMMs, zu verwenden.

Die Aufgabe der Erfindung besteht darin, ein Verfahren zur Sprecherverifikation anzugeben, bei dem eine Verbesserung dahingehend vorgenommen ist, dass weniger komplexe Algorithmen eingesetzt werden können und sich der Trainingsaufwand reduzieren lässt, wobei das Verfahren trotzdem sicher ist und bei seinen Anwendern auf große Akzeptanz trifft.

Diese Aufgabe wird gemäß den Merkmalen der unabhängigen Patentansprüche gelöst.

Zur Lösung der Aufgabe wird ein Verfahren zur Verifikation eines Sprechers anhand eines Rechners angegeben, bei dem der Sprecher mindestens ein Codewort ausspricht. Es wird ein Vergleich dieses ausgesprochenen Codeworts mit mindestens einem Muster durchgeführt. Der Sprecher wird verifiziert, falls das mindestens eine Muster mit einer vorgegebenen Mindestgüte mit dem ausgesprochenen Codewort übereinstimmt, wobei das Codewort derart ausgeführt ist, daß es aus mindestens zwei Silbeneinheiten besteht, wobei mindestens eine Silbeneinheit Bestandteil eines weiteren Codeworts ist. Ansonsten wird der Sprecher nicht verifiziert.

Die genannte Mindestgüte kann dabei vorteilhaft abzielen auf ein Abstandsmaß zwischen dem gesprochenen Codewort und dem mindestens einen Muster.

Durch die neue Zusammenstellung der Silbeneinheiten des Codeworts ist es möglich, eine Vielzahl von Codeworten anzubieten bzw. von dem Sprecher zur Verifikation zu fordern, wobei der Sprecher nicht all die Codeworte, d.h. die Kombinationen der Silbeneinheiten, (z.B. in einer Trainingsphase) gesprochen haben muß. Auch ist von Vorteil, daß sich der Benutzer kein Codewort merken muß, die Authentifikation beruht auf der Eigentümlichkeit seiner Stimme. Das zu sprechende Codewort wird von dem Rechner zufällig anhand der ihm bekannten Silbeneinheiten zusammengestellt und dem Benutzer dargestellt. Dieser braucht es lediglich laut aufzusagen und der Rechner überprüft, ob zu mindestens einem Muster ein hinsichtlich der Güte der Übereinstimmung ausreichender Abstand besteht. Ist dies der Fall, hat sich der Benutzer erfolgreich gegenüber dem System authentifiziert.

Insgesamt ist mit einer hohen Wahrscheinlichkeit sichergestellt, daß, abhängig von der Anzahl der zur Verfügung stehenden Silbeneinheiten, das Codewort häufig wechselt, was den eingangs erläuterten Angriff des Mitschnitts der Stimme des berechtigten Benutzers wirksam begegnet.

Eine Weiterbildung besteht darin, daß dem Sprecher das auszusprechende Codewort insbesondere angezeigt wird. Dies hat den Vorteil, daß der Sprecher sieht, welches Codewort er auszusprechen hat und sich insbesondere nicht das Codewort selbst merken muß.

Eine andere Weiterbildung besteht darin, daß der Sprecher nur dann authentifiziert wird, wenn er mehrere Codewörter jeweils mit ausreichender Mindestgüte ausgesprochen hat. Durch die Abfrage mehrere Codewörter wird das Risiko einer zufälligen Erkennung oder eines zufällig erfolgreichen Angriffs erheblich reduziert.

Auch ist es eine Weiterbildung, daß jede Silbeneinheit mindestens eine Zahl umfaßt. Zahlen haben die oben angesprochene Eigenschaft, daß sie einzeln und in Kombination mit anderen Zahlen jeweils eine eigene Bedeutung haben. So können auch die Silbeneinheiten, die aus einzelnen Zahlen bestehen, bunt gemischt werden, wobei sich neue Codewörter ergeben, die gerade in neuer Zusammensetzung zuvor noch nicht gesprochen worden sein müssen.

Der Vorteil liegt insbesondere darin, daß bei einer einfachen Erkennung bzw. Verifikation eines Sprechers durch Sprechen eines vorgegebenen Codeworts lediglich verglichen wird, ob der Sprecher das Codewort im Rahmen einer vorgegebenen Toleranz zu dem vorher abgespeicherten und ebenfalls von diesem Sprecher gesprochenen Muster aufgesagt hat. Ist dies der Fall, so wird der Sprecher positiv authentifiziert, ansonsten erfolgt eine Zurückweisung. Der Sprecher selbst nutzt dabei immer dieses Codewort, ein Angriff, beispielsweise mittels Aufnahmegeräts, kann somit leicht erfolgreich sein. In dem hier vorgestellten Verfahren ist es insbesondere von Vorteil, daß für den Sprecher eine Vielzahl von Codewörtern zur Verfügung stehen, deren jedes er nicht vorher gesprochen (trainiert) zu haben braucht. Damit ist die Menge der, insbesondere per Zufallsgenerator angewählten, Codewörter weitaus größer als die Menge der Wörter, die der Sprecher zuvor gesprochen hat. Dadurch erhöht sich wesentlich die Akzeptanz des Sprechers, der nicht langwierige Trainingsprozeduren über sich ergehen lassen muß.

Hierbei sei angemerkt, daß das beschriebene Verfahren auch eingesetzt werden kann, wenn dem Benutzer kein Codewort angezeigt wird. In so einem Fall muß sich der Benutzer die von Codewörter merken, die potentiell abgefragt werden könnten. Alternativ dazu merkt er sich eine (logische) Verknüpfung, mit der die Abfrage der Codewörter verbunden ist. So gibt die Verknüpfung vor, welches (sich verändernde) Codewort gerade zu sprechen ist, ohne dieses selbst anzuzeigen. Ein Beispiel hierfür besteht in der Abfrage von Datumsangaben. Hier ändern sich die Codewörter selbst, wobei für den berechtigten Benutzer, der weiß, in welcher Weise er die Datumsangabe(n) sprechen muß, ebenfalls keine aufwendigen Merkvorgänge notwendig sind.

Eine Ausgestaltung besteht darin, daß das oben beschriebene Verfahren zuvor mittels eines Trainingsverfahrens auf den jeweiligen Sprecher angepaßt wird. Dabei werden von dem Sprecher mehrere Wörter gesprochen, die automatisch in Silbeneinheiten segmentiert werden. Die Silbeneinheiten selbst werden abgespeichert.

Hierbei bilden die gesprochenen Silbeneinheiten eine Basis für die Codewörter, die von dem Sprecher gefordert werden können.

Eine Ausgestaltung besteht darin, daß das von dem Sprecher abgefragte Codewort ein aus den segmentierten Silbeneinheiten zusammengesetztes Muster ist. Hierbei sind zweckmäßig zwei aber auch mehr Silbeneinheiten miteinander kombinierbar.

Auch ist es eine Ausgestaltung, daß die Segmentierung in Silbeneinheiten mittels eines DTW-Algorithmus (DTW=Dynamic Time Warp) erfolgt. Eine Beschreibung des DTW-Algorithmus findet sich z.B. in [1]. Dabei werden mit diesem Verfahren insbesondere anhand der Lautstärke des gesprochenen Sprachsignals Anfang und Ende der Silbeneinheiten bestimmt. Die Zeitdauer des gesprochenen Signals wird auf eine vorgegebene Zeitachse normiert (d.h. gedehnt oder gestaucht), wobei durch vorgegebene Laute im statistischen Mittel (zum Beispiel anhand des Mittelwerts oder des Medians) die Entscheidung getroffen wird, wo sich eine (Segment-)Grenze zwischen den Silbeneinheiten befindet.

Dabei ist es insbesondere von Vorteil, daß die Segmentierung anhand einer Menge vorgegebener Sprachproben (Referenzen, Referenzmodell), gegebenenfalls von unterschiedlichen Sprechern, insbesondere männlichen und weiblichen Sprechern, erfolgt. Im Rahmen des Trainings auf die Eigentümlichkeit des zu erkennenden und zu authentifizierenden Sprechers werden diese vorgegebenen (dem System beigefügten) Sprachproben, durch die eigentümlichen Sprachproben, das heißt Muster, des zu authentifizierenden Sprechers, überschrieben. Vorteilhaft sind die Sprachproben für einen Einstieg in das Training auf die eigentümliche Sprechweise des zu authentifizierenden Sprechers. Dabei ist es ferner von Vorteil, daß die Sprachproben von unterschiedlichen Sprechern stammen, so daß gerade die Segmentierung der Silbeneinheiten des Sprechers anhand dieser vorgegebenen Sprachproben effizient durchgeführt werden kann.

Eine andere Weiterbildung besteht darin, daß das Muster insbesondere zweistellige Zahlen umfaßt. Dabei können weiterhin besonders vorteilhaft die Zahlen in einem Bereich von 21 bis 99 liegen. Hierbei ist es von Vorteil, daß nur wenige Zahlen von dem Sprecher trainiert werden müssen und weitaus mehr Zahlen von dem System aus Silbeneinheiten zu abfragbaren Codeworten zusammengesetzt werden können.

Spricht der zu authentifizierende Sprecher die Zahlen 31 und 27 im einer Trainingsphase, so werden diese beiden Zahlen anhand der vorgegebenen Sprachproben segmentiert in:
"einund", "dreißig", "siebenund", "zwanzig".

Mit diesen Silbeneinheiten ist es möglich, ohne vorheriges Training auch die Zahlen 37 und 21 abzufragen. Diese Permutation der Ziffern und der damit verbundenen Silbeneinheiten macht deutlich, daß wenige Sprechproben des zu authentifizierenden Sprechers ausreichen, um aus einer großen Menge möglicher Codewörter eine Abfrage zur Verifikation starten zu können.

Auch wird zur Lösung der Aufgabe eine Anordnung zur Verifikation eines Sprechers angegeben, bei der eine Prozessoreinheit vorgesehen ist, die derart eingerichtet ist, daß
a)ein von einem Sprecher ausgesprochenes Codewort erfaßbar ist;
b)das Codewort derart ausgeführt ist, daß es aus mindestens zwei Silbeneinheiten besteht, wobei mindestens eine Silbeneinheit Bestandteil eines weiteren Codewortes ist;
c)ein Vergleich des ausgesprochenen Codeworts mit mindestens einem Muster durchführbar ist;
d)der Sprecher verifiziert wird, falls das mindestens eine Muster mit einer vorgegebenen Mindestgüte mit dem ausgesprochenen Codewort übereinstimmt;
e)bei dem der Sprecher ansonsten nicht verifiziert wird.

Die Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnungen dargestellt und erläutert.

Es zeigen
- Fig.1: ein Verfahren zur Verifikation eines Sprechers mit vorherigem Training;
- Fig.2: Schritte eines Verfahrens zur automatischen Segmentierung eines Sprachsignals;
- Fig.3: eine Prozessoreinheit.

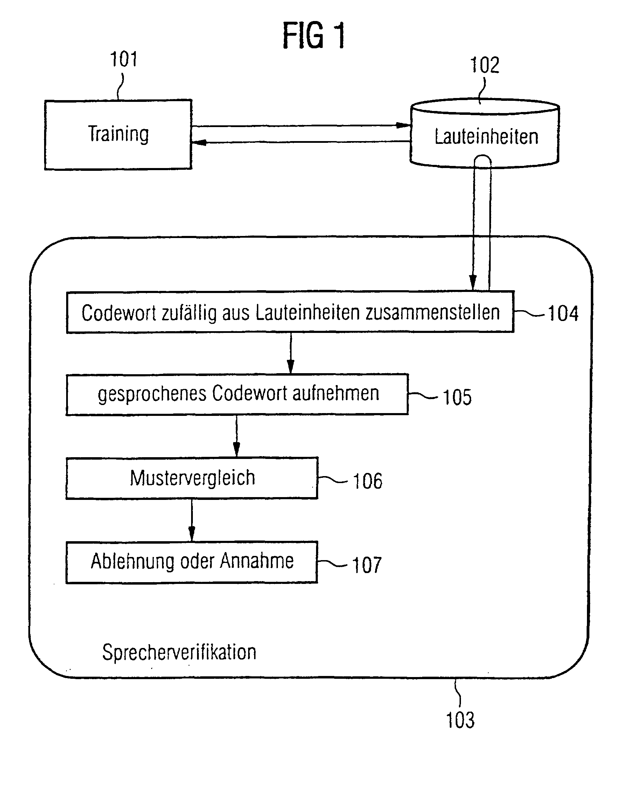

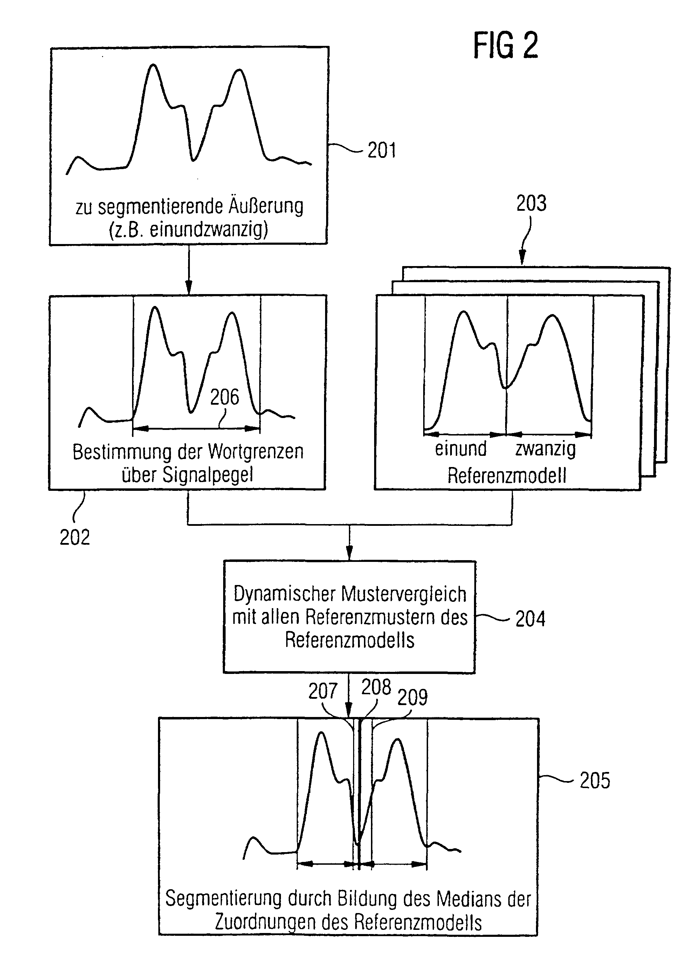

**Fig.1** zeigt eine Skizze mit Schritten eines Verfahrens zur Verifikation eines Sprechers mit vorherigem Training. In einem Training 101 werden Silbeneinheiten 102, die zunächst in Form vorgegebener Sprachproben vorliegen, an den zu verifizierenden Sprecher adaptiert (siehe Fig.2 mit zugehöriger Beschreibung). Die Sprecherverifikation 103 ermittelt zunächst zufällig ein Codewort aus Silbeneinheiten 102 (vgl. Schritt 104). Das Codewort wird vorzugsweise dem zu verifizierenden Sprecher angezeigt, woraufhin er es ausspricht, das gesprochene Codewort wird in einem Schritt 105 aufgenommen und in einem Schritt 106 mit einem Muster aus den trainierten Silbeneinheiten 102 verglichen. Ist der Abstand des ausgesprochenen Codeworts von dem Muster kleiner als eine vorgegebene Schwelle, so wird der Sprecher verifiziert, im anderen Fall wird der Sprecher nicht verifiziert, das Codewort wird als von dem zu verifizierenden Sprecher stammend abgelehnt (siehe Schritt 107).

**Fig.2** zeigt Schritte eines Verfahrens zur automatischen Segmentierung eines Sprachsignals. In einem Block 201 ist eine segmentierende Äußerung "21" in deren Energieverlauf über der Zeit (Signalpegel) dargestellt. Anhand einer vorgegebenen Schwelle für den Signalpegels (Unterscheidung: Signal - kein Signal) werden in einem Schritt 202 die Grenzen der zu segmentierenden Äußerung bestimmt. Es ergibt sich ein Bereich 206. Jede Sprachprobe (Referenzmodell) 203 stellt die gleiche Äußerung "21", gesprochen von unterschiedlichen Sprechern, dar, wobei in den Sprachproben jeweils der Verlauf der Segmentgrenzen zwischen den Silbeneinheiten, hier zwischen "einund" und "zwanzig", bekannt ist. Die Sprachproben 203 werden in einem dynamischen Mustervergleich 204 herangezogen, um aus der zu segmentierenden Äußerung 201 innerhalb der Wortgrenzen 206 zu bestimmen, wo die Trennung zwischen den Silbeneinheiten "einund" und "zwanzig" liegt.

Block 205 zeigt mehrere mögliche Verläufe 207, 208 und 209 zwischen den Silbeneinheiten "einund" und "zwanzig". Durch geeignete Mittelwertbildung, insbesondere Bestimmung des Medians, ergibt sich als geeignete Unterteilung der Silbeneinheiten die Grenze 208. Im Rahmen des dynamischen Mustervergleichs 204 werden die Wortgrenzen der zu segmentierenden Äußerung 206 auf die jeweiligen Wortgrenzen der Repräsentanten des Referenzmodells 203 abgebildet, das heißt gedehnt oder gestaucht. Dadurch ist eine Zuordnung der im Referenzmodell bekannten Unterteilungen der Silbeneinheiten möglich, da nun die Wortgrenzen auf einen gleichen Zeitabschnitt normiert sind.

Eine Alternative besteht darin, die Segmentierung mittels eines HMM-Algorithmus (HMM: Hidden Markov Modelle) durchzuführen. Dabei sind die leistungsfähigen HMM-Modelle äußerst rechenzeitintensiv und benötigen viel Arbeitsspeicher. Die HMMs beruhen auf einer statistischen Datenbasis, die insbesondere die Wahrscheinlichkeit der Übergänge von Silbeneinheiten umfaßt. Eine Portierung auf neu zu kombinierende Silbeneinheiten ist äußerst aufwendig.

Das in Fig.2 beschriebene Verfahren ist dagegen wesentlich resourcenschonender als die Segmentierung mittels HMMs. Mit dem beschriebenen Referenzmodell, das insbesondere sechs Referenzen von sechs verschiedenen Sprechern (drei männlichen und drei weiblichen) umfaßt, bei denen die benötigten Lauteinheitsgrenzen bekannt sind, liefert sechs unterschiedliche Unterteilungen (angedeutet mit den drei Linien 207, 208 und 209), die den sechs Silbengrenzen bzw. Lauteinheitsgrenzen des Referenzmodells zugeordnet sind.

Ein weiterer Vorteil besteht darin, daß eine Portierung in eine andere Sprache keine komplette Datenbank zur Wortsegmentierung benötigt, sondern lediglich mit den erwähnten sechs Referenzmodellen (Sprechern) auskommt.

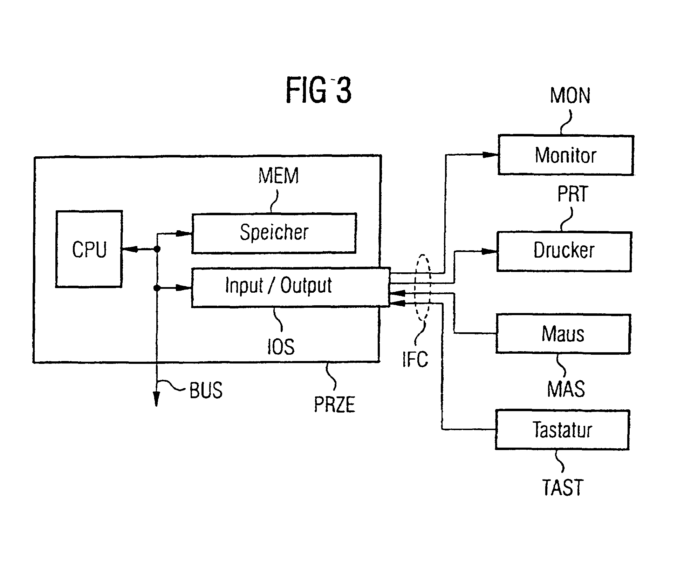

In Fig.3 ist eine Prozessoreinheit PRZE dargestellt. Die Prozessoreinheit PRZE umfaßt einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

### Literaturverzeichnis:

[1] Hiroaki Sakoe und Seibi Chiba: "Dynamic Programming Algorithm Optimization for Spoken Word Recognition". In: N. Rex Dixon und Thomas B. Martin, "Automatic Speech & Speaker Recognition", IEEE Press, New York, 1979.

## Patentansprüche

1. Verfahren zur Verifikation eines Sprechers anhand eines Rechners,
a)bei dem der Sprecher mindestens ein Codewort ausspricht;
b)bei dem das Codewort derart ausgeführt ist, daß es aus mindestens zwei Silbeneinheiten besteht, wobei mindestens eine Silbeneinheit Bestandteil eines weiteren Codewortes ist;
c) bei dem ein Vergleich des ausgesprochenen Codeworts mit mindestens einem Muster, bestehend aus vorher abgespeicherten und vom Sprecher trainierten Silbeneinheiten, durchgeführt wird;
d)bei dem der Sprecher verifiziert wird, falls das mindestens eine Muster mit einer vorgegebenen Mindestgüte mit dem ausgesprochenen Codewort übereinstimmt;
e)bei dem der Sprecher ansonsten nicht verifiziert wird.

2. Verfahren zur Verifikation eines Sprechers,
a)bei dem ein Codewort aus Silbeneinheiten neu zusammengestellt wird;
b)bei dem der Sprecher das Codewort ausspricht;
c)bei dem ein Vergleich des ausgesprochenen Codeworts mit mindestens einem Muster, bestehend aus vorher abgespeicherten und vom Sprecher trainierten Silbeneinheiten, durchgeführt wird;
d)bei dem der Sprecher verifiziert wird, falls das mindestens eine Muster mit einer vorgegebenen Mindestgüte mit dem ausgesprochenen Codewort übereinstimmt;
e)bei dem der Sprecher ansonsten nicht verifiziert wird.

3. Verfahren nach Anspruch 1 oder 2,
bei dem der Sprecher zum Aussprechen des Codeworts aufgefordert wird, indem das auszusprechende Codewort dem Sprecher angezeigt wird.

4. Verfahren nach zumindest einem der vorhergehenden Ansprüche,
bei dem der Sprecher nur dann authentifiziert wird, wenn er mehrere Codewörter jeweils mit ausreichender Mindestgüte ausgesprochen hat.

5. Verfahren nach zumindest einem der vorhergehenden Ansprüche,
bei dem jede Silbeneinheit mindestens eine Zahl umfaßt.

6. Verfahren zum Trainieren von Mustern, die zur Verfifikation eines Sprechers nach einem der vorhergehenden Ansprüchen herangezogen werden,
a)bei dem der Sprecher mehrere Wörter spricht,
b)bei dem die Wörter automatisch in Silbeneinheiten segmentiert werden;
c)bei dem die segmentierten Silbeneinheiten abgespeichert werden.

7. Verfahren nach Anspruch 6,
bei dem das vom Sprecher abgefragte Codewort ein aus den segmentierten Silbeneinheiten zusammengesetztes Muster ist.

8. Verfahren nach Anspruch 6 oder 7,
bei dem die Segmentierung in Silbeneinheiten mittels eines DTW-Algorithmus durchgeführt wird.

9. Verfahren nach zumindest einem der Ansprüche 6 bis 8,
bei dem anhand mehrerer vorgegebener Sprachproben die Segmentierung erfolgt.

10. Verfahren nach zumindest einem der Ansprüche 6 bis 9, bei dem durch die Sprachproben des zu verifizierenden Sprechers die Sprachproben durch sprecherspezifische Muster ersetzt werden.

11. Verfahren nach einem der vorhergehenden Ansprüche,
bei dem das Muster zweistellige Zahlen umfaßt.

12. Verfahren nach einem der vorhergehenden Ansprüche,
bei dem das Muster zweistellige Zahlen im Bereich von 21 bis 99 umfaßt.

13. Anordnung zur Verifikation eines Sprechers, bei der eine Prozessoreinheit vorgesehen ist, die derart eingerichtet ist, daß
a)ein von einem Sprecher ausgesprochenes Codewort erfaßbar ist;
b)das Codewort derart ausgeführt ist, daß es aus mindestens zwei Silbeneinheiten besteht, wobei mindestens eine Silbeneinheit Bestandteil eines weiteren Codewortes ist;
c)ein Vergleich des ausgesprochenen Codeworts mit mindestens einem Muster, bestehend aus vorher abgespeicherten und vom Sprecher trainierten Silbeneinheiten, durchführbar ist;
d)der Sprecher verifiziert wird, falls das mindestens eine Muster mit einer vorgegebenen Mindestgüte mit dem ausgesprochenen Codewort übereinstimmt;
e)bei dem der Sprecher ansonsten nicht verifiziert wird.

## Claims

1. Method for verifying a speaker by means of a computer,
a) in which the speaker utters at least one code word;
b) in which the code word is designed in such a manner that it consists of at least two phonemes, at least one phoneme being a component of another code word;
c) in which the uttered code word is compared with at least one pattern;
d) in which the speaker is verified if the at least one pattern matches the uttered code word with a predetermined minimum quality;
e) in which the speaker is not otherwise verified.

2. Method for verifying a speaker,
a) in which a code word is newly assembled from phonemes;
b) in which the speaker utters the code word;
c) in which the uttered code word is compared with at least one pattern;
d) in which the speaker is verified if the at least one pattern matches the uttered code word with a predetermined minimum quality;
e) in which the speaker is not otherwise verified.

3. Method according to Claim 1 or 2, in which the speaker is requested to utter the code word in that the code word to be uttered is displayed to the speaker.

4. Method according to at least one of the preceding claims, in which the speaker is only authenticated when he has uttered a number of code words in each case with sufficient minimum quality.

5. Method according to at least one of the preceding claims, in which each phoneme comprises at least one number.

6. Method for training patterns which are used for verifying a speaker according to one of the preceding claims,
a) in which the speaker speaks a number of words,
b) in which the words are automatically segmented into phonemes;
c) in which the segmented phonemes are stored.

7. Method according to Claim 6, in which the code word by which the speaker is tested is a pattern assembled from the segmented phonemes.

8. Method according to Claim 6 or 7, in which the segmenting into phonemes is carried out by means of a DTW algorithm.

9. Method according to at least one of Claims 6 to 8, in which the segmenting is effected by means of a number of predetermined voice samples.

10. Method according to at least one of Claims 6 to 9, in which the voice samples of the speaker to be verified replace the voice samples due to speaker-specific patterns.

11. Method according to one of the preceding claims, in which the pattern comprises two-digit numbers.

12. Method according to one of the preceding claims, in which the pattern comprises two-digit numbers within a range from 21 to 99.

13. Arrangement for verifying a speaker, in which a processor unit is provided which is set up in such a manner that
a) a code word uttered by a speaker can be detected;
b) the code word is designed in such a manner that it consists of at least two phonemes, at least one phoneme being a component of a further code word;
c) the uttered code word can be compared with at least one pattern;
d) the speaker is verified if the at least one pattern matches the uttered code word with a predetermined minimum quality;
e) in which the speaker is not otherwise verified.

## Revendications

1. Procédé pour la vérification d'un locuteur à l'aide d'un ordinateur,
a) dans lequel le locuteur prononce au moins un mot de code ;
b) dans lequel le mot de code est conçu de telle manière qu'il est constitué d'au moins deux unités de syllabes, au moins une unité de syllabe faisant partie d'un autre mot de code ;
c) dans lequel une comparaison du mot de code prononcé est réalisée avec au moins un échantillon constitué d'unités de syllabes mémorisées préalablement et exercées par le locuteur ;
d) dans lequel le locuteur est vérifié, au cas où l'au moins un échantillon concorde avec le mot de code prononcé avec une qualité minimum prédéfinie;
e) dans lequel le locuteur n'est autrement pas vérifié.

2. Procédé pour la vérification d'un locuteur,
a) dans lequel un mot de code est nouvellement composé d'unités de syllabes;
b) dans lequel le locuteur prononce le mot de code ;
c) dans lequel une comparaison du mot de code prononcé est réalisée avec au moins un échantillon constitué d'unités de syllabes mémorisées préalablement et exercées par le locuteur ;
d) dans lequel le locuteur est vérifié, au cas où l'au moins un échantillon concorde avec le mot de code prononcé avec une qualité minimum prédéfinie;
e) dans lequel le locuteur n'est autrement pas vérifié.

3. Procédé selon la revendication 1 ou 2,
dans lequel il est demandé au locuteur de prononcer le mot de code, du fait que le mot de code à prononcer est visualisé au locuteur.

4. Procédé selon au moins l'une quelconque des revendications précédentes,
dans lequel le locuteur n'est authentifié que lorsqu'il a prononcé plusieurs mots de code avec respectivement une qualité minimum suffisante.

5. Procédé selon au moins l'une quelconque des revendications précédentes,
dans lequel chaque unité de syllabes comprend au moins un chiffre.

6. Procédé pour l'exercice d'échantillons qui sont pris en compte pour la vérification d'un locuteur, selon l'une quelconque des revendications précédentes,
a) dans lequel le locuteur prononce plusieurs mots,
b) dans lequel les mots sont automatiquement segmentés en unités de syllabes ;
c) dans lequel les unités de syllabes segmentées sont mémorisées.

7. Procédé selon la revendication 6,
dans lequel le mot de code demandé au locuteur est un échantillon composé des unités de syllabes segmentées.

8. Procédé selon la revendication 6 ou 7,
dans lequel la segmentation en unités de syllabes est exécutée au moyen d'un algorithme DTW.

9. Procédé selon au moins l'une quelconque des revendications 6 à 8,
dans lequel la segmentation est réalisée à l'aide de plusieurs essais vocaux prédéfinis.

10. Procédé selon au moins l'une quelconque des revendications 6 à 9,
dans lequel les essais vocaux sont remplacés par des échantillons spécifiques au locuteur au moyen des essais vocaux du locuteur à soumettre à une vérification.

11. Procédé selon l'une quelconque des revendications précédentes,
dans lequel l'échantillon comprend des nombres à deux chiffres.

12. Procédé selon l'une quelconque des revendications précédentes,
dans lequel l'échantillon comprend des nombres à deux chiffres dans la plage de 21 à 99.

13. Dispositif pour la vérification d'un locuteur, dans lequel une unité de processeur est prévue, qui est conçue de telle manière que
a) un mot de code prononcé par un locuteur peut être enregistré ;
b) le mot de code est conçu de telle manière qu'il est constitué au moins de deux unités de syllabes, au moins une unité de syllabes faisant partie d'un autre mot de code ;
c) une comparaison du mot de code prononcé peut être réalisée avec au moins un échantillon constitué d'unités de syllabes mémorisées préalablement et exercées par le locuteur ;
d) le locuteur est vérifié, au cas où l'au moins un échantillon concorde avec le mot de code prononcé avec une qualité minimum prédéfinie;
e) dans lequel le locuteur n'est autrement pas vérifié.
